Europäisches Patentamt

European Patent Office

Office européen des brevets

(11) Veröffentlichungsnummer: **0 062 098**
**B1**

(12) **EUROPÄISCHE PATENTSCHRIFT**

(45) Veröffentlichungstag der Patentschrift:
25.06.86

(21) Anmeldenummer: 81108622.2

(22) Anmeldetag: 21.10.81

(51) Int. Cl.⁴: **F 03 B 13/08**, F 16 J 15/34

(54) Wasserturbine.

(30) Priorität: 07.04.81 CH 2334/81

(43) Veröffentlichungstag der Anmeldung:
13.10.82 Patentblatt 82/41

(45) Bekanntmachung des Hinweises auf die Patenterteilung:
25.06.86 Patentblatt 86/26

(84) Benannte Vertragsstaaten:
AT BE CH DE FR GB IT LI NL SE

(56) Entgegenhaltungen:
EP - A - 0 013 678
DE - B - 1 151 155
FR - A - 2 385 013
FR - A - 2 397 575
US - A - 3 606 568

(73) Patentinhaber: Sulzer - Escher Wyss AG,
Hardstrasse 319, CH-8023 Zürich (CH)

(72) Erfinder: Miller, Helmut, Vorbühlstrasse 16,
CH-8962 Bergdietikon (CH)
Erfinder: Baumann, Kurt, Alemannenstrasse 76,
D-7993 Kressbronn (DE)
Erfinder: Halder, Franz, Amselweg 2, D-7980 Ravensburg
(DE)
Erfinder: Meystre, Noel, Wampflenstrasse 79,
CH-8706 Meilen (CH)

(74) Vertreter: Paschedag, Hansjoachim et al, c/o Escher
Wyss AG Patentabteilung Postfach, CH-8023 Zürich (CH)

## Beschreibung

Die Erfindung betrifft eine Wasserturbine mit einem in einem feststehenden Gehäuse umlaufenden Rotor und einer ringförmigen Dichtung zur Abdichtung des die Turbine durchströmenden Wassers zwischen entsprechenden Teilen des Rotors und des Gehäuses, wobei das eine der Teile als starres Schonteil dient, das eine Lauffläche aufweist, gegen die wenigstens ein in das andere Teil eingelassener Dichtungskörper aus nachgiebigem Material unter Ausgleich von Abstandstoleranzen angedrückt ist, wobei der Lauffläche eine reibungsmindernde Flüssigkeit zuführbar ist.

Bei Wasserturbinen mit grossem Durchmesser des Laufrades, z.B. im Meter-Bereich, wie bei Aussenkranz-Rohrturbinen, ist es notwendig, das unter Druck stehende Wasser am Umfang des Laufrades abzudichten, um ein Eindringen in den am Aussenkranz angeordneten elektrischen Generator zu verhindern.

Dichtungen für kleine Durchmesser, beispielsweise im Zentimeter- oder im Dezimeter-Bereich sind bereits in grosser Zahl bekannt, beispielsweise als Wellen-Dichtungen oder Simmerringe, und genügen in der Regel den gestellten Anforderungen bezüglich Dichtheit, guten Schmiereigenschaften und ausreichender Lebensdauer bei den in diesen Bereichen auftretenden Bedingungen.

Für die Abdichtung umlaufender Teile grossen Durchmessers genügen solche für kleine Durchmesser durchaus geeignete Dichtungen den auftretenden Anforderungen nicht mehr. Beispielsweise treten bei Rohrturbinen Relativgeschwindigkeiten der umlaufenden Teile im Bereich erheblich über 10 m/s auf, beispielsweise in der Grössenordnung von 50 m/s, welche bedeutende Reibungskräfte zur Folge haben. Der Verschleiss der Dichtungskörper ist in diesen Fällen daher erheblich und die Standzeit oder Lebensdauer der Dichtungen gering. Die bei den grossen Durchmessern auftretenden Deformationen liegen teilweise im Millimeter-Bereich, so dass erheblich grössere Toleranzen ausgeglichen werden müssen, als bei bekannten Dichtungen für kleinere Durchmesser. Die Anwendung bekannter Dichtungen für Wasserturbinen mit grossen Durchmessern war daher unbefriedigend.

Verschiedentlich ist bereits versucht worden, diese Probleme zu lösen. Beispielsweise ist in der US-A-3 606 568 die Dichtung einer Wasserturbine beschrieben, die aus einem Doppelwulstring besteht, dessen beide Wülste hydraulisch gegen eine Lauffläche gedrückt werden, wobei die Zuführung von reibungsmindernder Flüssigkeit vom Dichtungskörper her zwischen den Wülsten erfolgt. Damit ist zwar ein gewisser Toleranzausgleich möglich, jedoch sind die Reibungskräfte immer noch erheblich und die schnelle Abnützung der Wülste hat eine zu geringe Lebensdauer und ein frühzeitiges Undichtwerden zur Folge.

In der DE-A-1 151 155 ist eine ringförmige Dichtung beschrieben, welche eine Lippendichtung aufweist, deren Lippe durch den Druck des abzudichtenden Mediums an eine Lauffläche angedrückt wird. Auch eine solche Dichtung unterliegt einem zu grossen Verschleiss und zeigt eine ungenügende Lebensdauer.

Weiter ist bereits vorgeschlagen worden, einen Dichtungskörper, der mit Nuten versehen ist, für die Abdichtung umlaufender Teile grossen Durchmessers zu verwenden. Es zeigte sich jedoch, dass durch die Nuten im Dichtungskörper nur eine ungenügende Schmierung der Laufflächen des Dichtungskörpers erreicht wird, so dass die Reibungskräfte immer noch relativ gross sind, und sich der Dichtungskörper durch die Anpresskräfte deformiert und rasch abnützt, so dass auch in diesem Fall Dichtheit und Lebensdauer ungenügend sind.

In der EP-A-13 678 ist eine Gasdichtung für eine Gasturbine oder einen Hochdruckkompressor offenbart, bei der zwei starre Dichtungsteile vorgesehen sind. Durch spiralförmige Nuten, die nur einen Teil der Dichtungsfläche einnehmen, werden mittels Pumpwirkung die Laufflächen so weit auseinandergedrückt, dass keine Trockenreibung auftritt. Eine Flüssigkeitsschmierung ist nicht vorgesehen, so dass solche Dichtungen keinen Hinweis auf die Verbesserung der Abdichtung von Wasserturbinen grossen Durchmessers liefern.

Der Erfindung liegt die Aufgabe zugrunde, die erwähnten Nachteile des Standes der Technik zu vermeiden und eine Wasserturbine mit verbesserter Dichtung des Rotors gegen das Gehäuse zu schaffen, welche insbesondere eine geringere Reibung und Abnützung, eine längere Lebensdauer, bessere Schmierung und eine verbesserte Dichtheit über längere Standzeiten bei vergrösserten Toleranzen aufweist.

Erfindungsgemäss wird diese Aufgabe dadurch gelöst, dass das Schonteil Zuführungen aufweist, über die die Lauffläche im wesentlichen über die gesamte Breite der Lauffläche bzw. des Dichtungskörpers vom Schonteil her reibungsmindernde Flüssigkeit zuführbar ist.

Als reibungsmindernde Flüssigkeit kann zweckmässigerweise das abzudichtende Wasser selbst dienen, wobei die Zuführung über Nuten in der Lauffläche erfolgt, und diese Nuten eine überwiegende Richtungskomponente in Absperrichtung des abzudichtenden Wassers besitzen, beispielsweise bei einer zur Achse senkrechten Lauffläche, indem die Nuten radial in der Lauffläche angeordnet sind, oder bei einer zylindermantelförmigen Lauffläche, indem die Nuten axial in der Lauffläche liegen.

Weiter kann es zweckmässig sein, auf der Lauffläche des Schonteils eine Anzahl von Keramikkörpern anzuordnen, deren Stosskanten die Nuten bilden.

Als zweckmässige Ausführungen des Dichtungskörpers haben sich Lippendichtungen erwiesen, deren Dichtungslippe durch ihre Eigenelastizität oder durch eine Federeinlage an die Lauffläche angedrückt wird oder unter Überdruck stehende Schlauchdichtungen.

Die Erfindung wird anhand der in den Zeichnungen wiedergegebenen Ausführungsbeispiele erläutert.

Fig. 1 zeigt eine Wasserturbine mit Dichtungen zwischen Rotor-Aussenkranz und Gehäuse,

Fig. 2a und 2b zeigen ein erstes Ausführungsbeispiel einer Dichtung im auseinandergerückten Zustand und in Arbeitsstellung,

Fig. 3a und 3b zeigen ein Beispiel einer Dichtung mit Keramik-Lauffläche im auseinandergerückten Zustand und in Arbeitsstellung,

Fig. 4 zeigt die Nut einer Dichtung nach Fig. 2a und 2b im Schnitt,

Fig. 5 zeigt die Keramikkörper und Nuten einer Dichtung nach Fig. 3a und 3b im Schnitt,

Fig. 6 zeigt eine Lauffläche mit Radial-Nuten,

Fig. 7 zeigt eine Lauffläche mit schrägen Nuten,

Fig. 8 zeigt eine Dichtung mit Keramikkörpern und Flüssigkeitszufuhr über Bohrungen,

Fig. 9 zeigt eine Dichtung mit zwei Dichtungskörpern,

Fig. 10 zeigt eine Dichtung mit zwei Dichtungskörpern und Keramikkörper,

Fig. 11 zeigt eine Dichtung mit einem Schlauchdichtungskörper,

Fig. 12 zeigt eine Dichtung mit einem Schlauchdichtungskörper und Keramikkörper, und

Fig. 13 zeigt einen Ausschnitt des Aussenkranzes einer Rohrturbine mit Beispielen verschiedener Dichtungen.

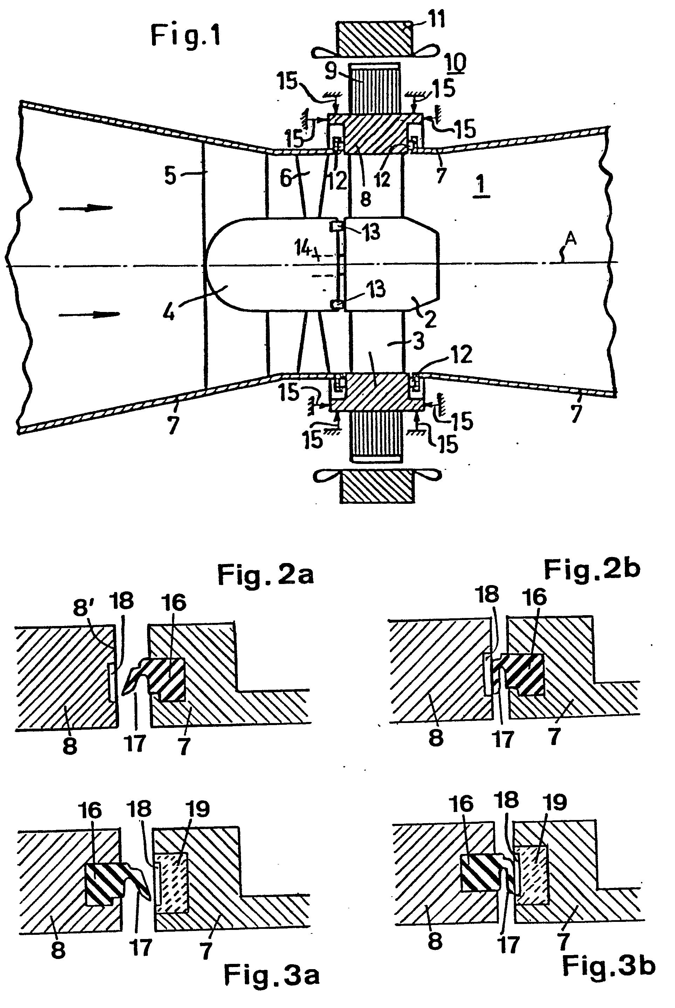

Fig. 1 zeigt eine Wasserkraftanlage mit einer als Aussenkranz-Rohrturbine 1 ausgebildeten Wasserturbine im Schnitt. Diese besteht im wesentlichen aus einem ein Laufrad 2 mit festen oder verstellbaren Schaufeln 3 aufweisenden Rotor sowie einem zentralen Anströmkörper 4, der in Strömungsrichtung des Wassers vor der Nabe des Laufrades 2 angeordnet ist und aus festen oder beweglichen Laufschaufeln 6. Der Anströmkörper 4 ist über radiale, sich in Strömungsrichtung des Wassers erstreckende Trennwände 5 in einem rohrförmigen Turbinengehäuse 7 befestigt. Das Laufrad 2 ist aussen von einem mit den Schaufeln verbundenen Kranz 8 umgeben, auf dem der Rotor 9 eines elektrischen Generators 10 befestigt ist. Der Rotor 9 ist seinerseits vom Stator 11 des Generators 10 umgeben. Zwischen dem Kranz und dem Turbinengehäuse 7 sind beidseitig Dichtungen 12 vorgesehen, welche ringförmig mit einem Durchmesser von mehreren Metern ausgebildet sind. Diese Dichtungen 12 dichten den den elektrischen Generator 10 enthaltenden Aussenbereich gegen das unter einem Druck bis zu einigen Bar stehende Wasser im Inneren der Rohrturbine 1 ab. Analoge ringförmige Dichtungen 13 sind zwischen der Nabe des Laufrades 2 und dem Anströmkörper 4 vorgesehen, die das Innere des Anströmkörpers 4 und die Lager der Welle 13 ebenfalls vom Druckwasser in der Rohrturbine 1 abdichten. Auch hier liegt der Durchmesser der ringförmigen Dichtung 13 in der Regel über einem Meter.

Die Achse A der Rohrturbine 1 ist im dargestellten Beispiel horizontal angeordnet und bei Betrieb der Rohrturbine treten Geschwindigkeiten im Bereich von 20–100 m/s auf. Die bei der Rotation des Laufrades 2 auftretenden Deformationen liegen z.T. im Bereich über 1 mm.

Um eine sichere Abdichtung bei diesen Toleranzen und Geschwindigkeiten über längere Zeitdauern ohne erhebliche Leckage zu gewährleisten, sind die ringförmigen Dichtungen 12 und 13 gemäss den in den Fig. 2a und 2b dargestellten Schnittbildern ausgeführt. Fig. 2a zeigt diese Dichtung mit auseinander gerücktem Laufradkranz 8 und Rohrgehäuse-Ende 7. Fig. 2b zeigt die gleichen Teile in Arbeitsstellung. Dabei ist in die Endfläche des Rohrgehäuses 7 ein Dichtungskörper 16 eingelassen, der als ringförmige Lippendichtung ausgeführt ist. Die Dichtungslippe 17 dieser feststehenden Lippendichtung ist in Richtung zum Turbinen-Inneren, also zum abzusperrenden Medium hin gerichtet. Der rotierende Aussenkranz 8 bildet an seiner Seitenfläche eine kreisringförmige Lauffläche 8'. In Höhe der Dichtungslippe 17 sind in dieser Lauffläche 8' mehrere radial verlaufende Nuten 18 vorgesehen, die sich mindestens über die gesamte Berührungsfläche der Dichtungslippe 17 an der Lauffläche 8' erstrekken. Über diese Nuten 18 erfolgt vom Schonteil aus eine Zuführung von Wasser, welches die Reibung zwischen Dichtungslippe 17 und Schonfläche 8' deutlich vermindert und eine erhebliche Verlängerung der Lebensdauer, insbesondere des Dichtungskörpers bewirkt, wobei die verminderten Reibungskräfte praktisch über die gesamte Lebensdauer erhalten bleiben. Es zeigte sich, dass bei der beschriebenen Ausbildung der Dichtung nicht nur die Laufeigenschaften deutlich verbessert sind, sondern überraschenderweise die Leckage gering bleibt. Es entsteht zwischen der mit Nuten versehenen Schonfläche und der Dichtungslippe, die durch ihre Eigenelastizität, oder unterstützt durch eine Federeinlage, sowie durch den Wasserdruck an diese Schonfläche angedrückt wird, gerade ein so dünner Schmierfilm, dass zwar eine markante Verminderung der Reibungskräfte eintritt, jedoch die Leckage sehr gering gehalten werden kann. Insbesondere ergaben sich gegenüber der möglichen Ausführung mit Nuten im Dichtungskörper und einer glatten Lauffläche wesentlich kleinere Reibungskräfte und wesentlich längere Lebensdauern. Der Grund liegt vermutlich darin, dass die Zuführung von Schmierflüssigkeit vom Schonteil eine bessere Verteilung der Flüssigkeit über die gesamte Fläche der Dichtungslippe bewirkt, was nicht im gleichen Masse der Fall ist, wenn die Flüssigkeitszufuhr statt dessen über Nuten in der Dichtungslippe erfolgt.

Während beim Ausführungsbeispiel der Dichtung nach den Fig. 2a und 2b ein stillstehender Dichtungskörper 16 verwendet wird und eine rotierende Lauffläche 8', ist bei dem Beispiel nach den Fig. 3a und 3b der Dichtungskörper 16 im rotierenden Kranz 8 eingelassen. Das Gehäuseende 7 dient in diesem Fall als Gegenstück oder Schonteil. An diesem Schonteil 7 sind mehrere Keramikkörper 19 so eingelassen, so dass deren Oberflächen die Lauffläche bilden und deren Stosskanten die Nuten. Das spezielle Einfräsen von Nuten entfällt bei dieser Ausführung. Durch die Keramikkörper kann die Lebensdauer der Dichtungen noch weiter vergrössert werden.

Es sei bemerkt, dass sowohl bei Ausführungen mit feststehendem Dichtungskörper und rotierende Nuten aufweisender Lauffläche, als auch bei der Ausführung mit rotierendem Dichtungskörper und feststehender, mit Nuten versehener Lauffläche die Ergebnisse erheblich besser waren als bei üblichen vorbekannten Dichtungen mit grossem Durchmesser. Entscheidend ist mir, dass die Flüssigkeitszuführung vom Schonteil her erfolgt und nicht vom Dichtungskörper.

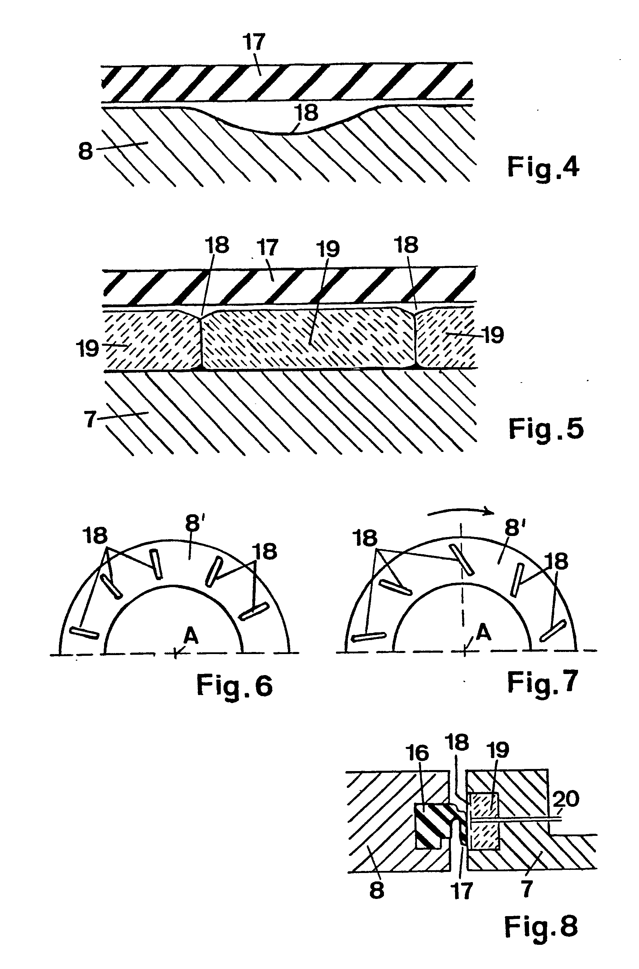

Fig. 4 zeigt die Form einer Nut 18 der Dichtung nach Fig. 2a und 2b im Schnitt. Die Tiefe dieser Nut lag bei einem praktischen Ausführungsbeispiel bei mehreren Zehntel-Millimetern und deren Breite bei einigen Millimetern. Die optimalen Werte für die Abmessungen der Nuten hängen im übrigen von Umfangsgeschwindigkeit und Radius der Dichtung ab.

Fig. 5 zeigt einen analogen Schnitt durch ein Beispiel einer Dichtung nach Fig. 3a und 3b. Hierbei dient das Gehäuseende 7 als Schonteil, auf das mehrere Keramikkörper 19 aufgesetzt sind, z.B. aufgekittet. Die Stosskanten dieser Keramikkörper 19 bilden in diesem Beispiel die erwünschten Nuten 18 zur Zuführung der reibungsmindernden Flüssigkeit.

Fig. 6 zeigt eine kreisringförmig um die Achse A ausgebildete Lauffläche 8' in Aufsicht. Auf dieser Lauffläche sind in gleichmässigem Abstand von einigen Dezimetern Nuten 18 vorgesehen, die in radialer Richtung verlaufen.

Diese Anordnung der Lauffläche senkrecht zur Achse A hat sich als besonders günstig erwiesen, jedoch zeigten auch Laufflächen auf einem Zylindermantel oder auf einem Konus um die Achse A günstige Ergebnisse, soweit die auf der Lauffläche vorgesehenen Nuten eine überwiegende Richtungskomponente in Absperrichtung des abzudichtenden Wassers besitzen, z.B. axial.

Fig. 7 zeigt eine ähnliche Lauffläche 8', wobei die Nuten 18 jedoch nicht genau radial verlaufen, sondern etwas schräg. Eine solche Anordnung hat sich unter bestimmten Bedingungen als günstig erwiesen, zum Beispiel wenn der innere Teil der Nuten 18 in Bewegungsrichtung voreilt.

Fig. 8 zeigt ein Ausführungsbeispiel, bei dem in das Schonteil 7 Keramikkörper 19 eingelassen sind. Die Keramikkörper sind mit Bohrungen 20 versehen, welche auf der Lauffläche münden.

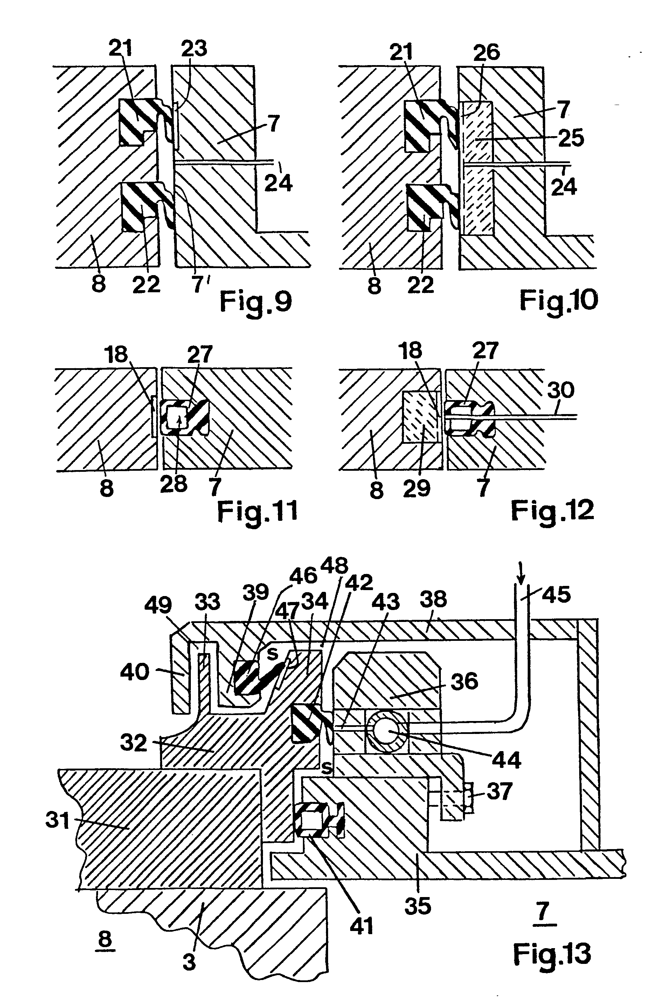

Fig. 9 zeigt ein Ausführungsbeispiel einer weiter verbesserten Dichtung mit zwei Dichtungskörpern 21 und 22 im Kranz 8. Die Lauffläche 7' des Gehäuses 7 ist am Ort des in Absperrichtung hinteren Dichtungskörpers 21 wiederum mit Nuten 23, wie vorstehend beschrieben, versehen. Auf der Lauffläche 7' zwischen den beiden Dichtungskörpern 21 und 22 mündet eine Bohrung 24, durch welche fremdstoffpartikelfreies Wasser mit Überdruck zugeführt wird. Hierdurch wird mit Sand verunreinigtes Wasser von der ersten Dichtungslippe ferngehalten und gleichzeitig durch den Überdruck ein Schmierfilm gebildet, so dass der Verschleiss auch dieses ersten Dichtungskörpers 22 gering bleibt und gleichzeitig alle Fremdstoffpartikel vom hinteren Dichtungskörper 21 ferngehalten werden. Ausser als Fremdstoffsperre dient der vordere Dichtungskörper 22 gleichzeitig als Stillstandsdichtung, deren Dichtungslippe bei stillstehendem Laufrad gegen die Lauffläche angedrückt wird und somit eine praktisch leckagefreie Abdichtung bewirkt.

Fig. 10 zeigt ein ähnliches Ausführungsbeispiel mit zwei Dichtungskörpern 21 und 22, wobei jedoch wiederum im Schonteil 7 Keramikkörper 25 mit Stossnuten 26 angeordnet sind, welche über die gesamte Länge beider Dichtungslippen reichen. Die Keramikkörper weisen wiederum Bohrungen 24 zur Zuführung von fremdstofffreiem Wasser auf.

Bei der Dichtung nach Fig. 11 wird an Stelle einer Lippendichtung eine Schlauchdichtung 27 verwendet, deren Inneres 28 pneumatisch oder hydraulisch mit Druck beaufschlagt ist. Die Lauffläche ist wiederum mit Nuten 18 versehen. Die Funktion ist dabei analog zu den Ausführungen mit einer Lippendichtung, wobei jedoch zur Abdichtung statt des Überdrucks des abzudichtenden Wassers ein extern dem Inneren 28 der Schlauchdichtung zugeführter Überdruck verwendet wird.

Fig. 12 zeigt ein Ausführungsbeispiel ähnlicher Art, bei dem in die Lauffläche Keramikkörper 29 eingelassen sind und die Schlauchdichtung 27 zusätzlich mit Bohrungen 30 versehen ist, über die wiederum fremdstofffreies Wasser zugeführt wird.

Fig. 13 zeigt eine Dichtungsanordnung am Aussenkreuz einer Rohrturbine im Detail. Dabei besteht der auf die Laufradschaufeln 3 aufgesetzte Kranz 8 aus einem ringförmigen Kranzteil 31, auf das axial je ein mit einem Absatz versehenes Ringteil 32 aufgesetzt, beispielsweise verschraubt oder aufgeschweisst ist. Dieses Ringteil 32 weist an seinem Aussenumfang zwei radial gerichtete ringförmige Stege 33 und 34 auf. Das Rohrgehäuse 7 besteht aus einem inneren Rohrteil 35, der an seinem Ende mit einer Andrehung versehen ist, die die gleiche Form besitzt wie die gegenüberstehenden Rohrflächen der Kranzteile 31 und 32. Auf das Gehäuseteil 35 ist radial ein Ring 36 aufgesetzt, der mit einer Positionierungsschraube 37 radial verstellbar ist, so dass der Abstand seiner Aussenfläche vom Gegenstück 32 und somit der Dichtungsspalt variierbar ist. Das Gehäuseteil 35 ist in einem bestimmten Abstand von einem mit diesem verbundenen feststehenden Mantel 38 umgeben, welcher an seinem freien Ende zwei radial nach innen gerichtete ringförmige Stege 39 und 40 aufweist, welche so angeordnet sind, dass die Stege im feststehenden und rotierenden Teil abwechselnd axial hintereinanderliegen und ein labyrinthartiger Dichtungsspalt S entsteht.

In diesem Dichtungsspalt sind drei Dichtungskörper in Absperrichtung hintereinander angeordnet. Der erste Dichtungskörper 41 ist als konventionelle Schlauchdichtung mit unter Überdruck stehendem Innenraum ausgeführt und dient wie vorstehend beschrieben als Stillstandsdichtung und Fremdpartikelsperre. Die in Absperrichtung folgende Dichtung 42 ist als Lippendichtung ausgeführt, wobei auf der Lauffläche eine Bohrung 43 zur Zuführung von fremdstofffreiem Wasser mündet. Diese Bohrung 43 wird von einer Ringleitung 44 im beweglichen Teil 36 gespiesen, der über eine Leitung 45 das gereinigte Wasser zugeführt wird. Auf die beschriebene Weise wird so wie bei dem Beispiel nach Fig. 9 das Eindringen von fremdstoffhaltigem Wasser aus dem Turbinen-Inneren in den Dichtungsspalt S verhindert. Als in Absperrichtung letzter Körper ist eine Lippendichtung 46 im ringförmigen Steg 39 vorgesehen, welche mit Nuten 47 im ringförmigen Steg 34 in der oben beschriebenen Weise zusammenwirkt. Die beschriebene Anordnung von drei Dichtungen in Absperrichtung hintereinander, wobei mindestens die beiden hinteren gemäss dem Erfindungsgedanken ausgeführt sind, bewirkt eine optimale Abdichtung mit minimalen Reibungsverlusten, besonders langer Lebensdauer der Dichtungselemente und geringem Verschleiss, wobei auch grössere Toleranzen gegeneinander bewegter Teile ausgeglichen werden können. Die Leckage ist dabei äusserst gering. Durch die Anordnung der ringförmigen Stege 34, 39, 33 und 40 im feststehenden und rotierenden Teil in axialer Richtung nebeneinander werden zudem Taschen 48 und 49 gebildet, in denen das durch die Dichtung hindurchgetretene Leckwasser bei Rotation des Kranzes abgeschleudert und aufgefangen wird, so dass ein Eintreten in den Aussenbereich, in dem der elektrische Generator angeordnet ist, praktisch vollständig vermieden werden kann.

## Patentansprüche

1. Wasserturbine mit einem in einem feststehenden Gehäuse (7) umlaufenden Rotor (2, 8) und einer ringförmigen Dichtung (12) zur Abdichtung des die Turbine durchströmenden Wassers zwischen entsprechenden Teilen des Rotors (8) und des Gehäuses (7), wobei das eine der Teile als starres Schonteil dient, das eine Lauffläche (7', 8') aufweist, gegen die wenigstens ein in das andere Teil eingelassener Dichtungskörper (16, 21, 27, 42, 46) aus nachgiebigem Material unter Ausgleich von Abstandstoleranzen angedrückt ist, wobei der Lauffläche eine reibungsmindernde Flüssigkeit zuführbar ist, dadurch gekennzeichnet, dass das Schonteil (7, 8) Zuführungen aufweist, über die der Lauffläche (7', 8') im wesentlichen über die gesamte Breite der Lauffläche bzw. des Dichtungskörpers vom Schonteil her reibungsmindernde Flüssigkeit zuführbar ist.

2. Dichtung nach Anspruch 1, dadurch gekennzeichnet, dass das abzudichtende Wasser als reibungsmindernde Flüssigkeit dient.

3. Wasserturbine nach Anspruch 1 oder 2, dadurch gekennzeichnet, dass als Zuführungen im Schonteil (7, 8) im Bereich seiner Lauffläche (7', 8') vorgesehene Nuten (18) dienen, deren Richtung eine überwiegende Komponente in Absperr-Richtung des abzudichtenden Wassers besitzt.

4. Wasserturbine nach Anspruch 3, dadurch gekennzeichnet, dass die Lauffläche (7', 8') eine senkrecht zur Achse liegende ringförmige Fläche (8') ist und die Nuten (18) eine überwiegend radiale Richtungskomponente haben.

5. Wasserturbine nach Anspruch 3, dadurch gekennzeichnet, dass die Lauffläche auf einer Zylindermantelfläche liegt und die Nuten eine überwiegend axiale Richtungskomponente haben.

6. Wasserturbine nach Anspruch 3, dadurch gekennzeichnet, dass das Schonteil (7) Keramikkörper (19) aufweist, deren Oberflächen die Laufflächen und die Stosskanten benachbarter Keramikkörper (19) die Nuten (18) bilden.

7. Wasserturbine nach Anspruch 1, dadurch gekennzeichnet, dass als reibungsmindernde Flüssigkeit von Fremdkörpern freies Medium, insbesondere Wasser dient.

8. Wasserturbine nach Anspruch 7, dadurch gekennzeichnet, dass die Zuführungen der reibungsmindernden Flüssigkeit auf der Lauffläche (7') mündende Bohrungen (20) im Schonteil (7) aufweisen.

9. Wasserturbin nach Anspruch 8, dadurch gekennzeichnet, dass die Bohrungen (20) auf der Oberfläche vom im Schonteil (7) eingelassenen oder am Schonteil (7) befestigten Keramikkörpern (19) münden.

10. Wasserturbine nach einem der Ansprüche 1–9, dadurch gekennzeichnet, dass der Dichtungskörper (16) als Lippendichtung ausgebildet ist, deren Dichtungslippe (17) durch Eigenelastizität, durch eine Federeinlage und/oder das abzudichtende Medium (7', 8'9) unter Ausgleich von Abstandstoleranzen an die Lauffläche angedrückt und deren freies Ende zum abzusperrenden Medium gerichtet ist.

11. Wasserturbine nach einem der Ansprüche 1–9, dadurch gekennzeichnet, dass der Dichtungskörper (27) als Schlauchdichtung ausgebildet ist, deren Innenraum (28) unter Überdruck steht.

12. Wasserturbine nach einem der Ansprüche 1–11, dadurch gekennzeichnet, dass in Absperrrichtung vor dem Dichtungskörper (21, 42) ein weiterer Dichtungskörper (22, 41) als Stillstandsdichtung und Fremdpartikelsperre angeordnet ist.

13. Wasserturbine nach Anspruch 12, dadurch gekennzeichnet, dass im Zwischenraum zwischen den beiden Dichtungskörpern (21, 22; 41, 42) der Druck mindestens gleich dem Druck des abzudichtenden Wassers ist.

14. Wasserturbine nach Anspruch 13, dadurch gekennzeichnet, dass zwischen den beiden Dichtungskörpern (21, 22; 41, 42) oder am Ort des in Absperrichtung hinteren Dichtungskörpers (42) eine Zuführung (43) einer reibungsmindernden Flüssigkeit unter Überdruck mündet.

15. Wasserturbine nach Anspruch 14, dadurch gekennzeichnet, dass die Zuführung (43) der reibungsmindernden Flüssigkeit auf der Lauffläche des Schonteiles (36) mündet.

16. Wasserturbine nach einem der Ansprüche 1–15, dadurch gekennzeichnet, dass in Absperrrichtung hinter einem Dichtungskörper (46) das rotierende Teil (18) einen ringförmigen Steg (33, 34) zur Abschleuderung von Leckflüssigkeit aufweist, der in eine zur Achse offene Auffangwanne (48, 49) im feststehenden Teil (7) eingreift.

17. Wasserturbine nach Anspruch 16, dadurch gekennzeichnet, dass die Auffangwanne (48) in Absperrichtung zwischen zwei Dichtungskörpern (42, 46) angeordnet ist.

**Claims**

1. Hydraulic turbine with a rotor (2, 8) revolving in a stationary housing (7) and with an annular seal (12) to seal off the water flowing through the turbine between corresponding parts of the rotor (8) and of the housing (7), in which one of the parts serves as a rigid protective part which has a contact surface (7', 8'), against which at least one sealing body (16, 21, 27, 42, 46) of flexible material embedded in the other part is pressed with an equalization of spacing tolerances, in which a friction-reducing fluid can be supplied to the contact surface, characterised in that the protective part (7, 8) has supply arrangements, via which friction-reducing fluid can be supplied to the contact surface (7', 8') substantially over the entire width of the contact surface or respectively of the sealing body from the direction of the protective part.

2. Seal according to Claim 1, characterised in that the water which is to be sealed off serves as friction-reducing fluid.

3. Hydraulic turbine according to Claim 1 or 2, characterised in that grooves (18) which are provided in the protective part (7, 8) in the region of its contact surface (7', 8') serve as supply arrangements, the direction of which has a predominant component in the shutoff direction of the water which is to be sealed off.

4. Hydraulic turbine according to Claim 3, characterised in that the contact surface (7', 8') is an annular surface (8') lying vertically to the axis and the grooves (18) have a predominantly radial component of direction.

5. Hydraulic turbine according to Claim 3, characterised in that the contact surface lies on the surface of a cylinder and the grooves have a predominantly axial direction component.

6. Hydraulic turbine according to Claim 3, characterised in that the protective part (7) has ceramic bodies (19), the surfaces of which form the contact surfaces and the abutting edges of adjacent ceramic bodies (19) form the grooves (18).

7. Hydraulic turbine according to Claim 1, characterised in that medium free of foreign bodies, in particular water, serves as friction-reducing fluid.

8. Hydraulic turbine according to Claim 7, characterised in that the supply arrangements of the friction-reducing fluid comprise bores (20) opening out on the contact surface (7') in the protective part (7).

9. Hydraulic turbine according to Claim 8, characterised in that the bores (20) open out on the surface of ceramic bodies (19) embedded in the protective part (7) or attached to the protective part (7).

10. Hydraulic turbine according to one of Claims 1 to 9, characterised in that the sealing body (16) is constructed as a lip seal, the sealing lip (17) of which is pressed against the contact surface by inherent elasticity, by a spring insert and/or by the medium (7', 8') which is to be sealed off, with equalization of spacing tolerances, and the free end of which is directed to the medium which is to be shut off.

11. Hydraulic turbine according to one of Claims 1 to 9, characterised in that the sealing body (27) is constructed as a tube seal, the interior (28) of which is under excess pressure.

12. Hydraulic turbine according to one of Claims 1 to 11, characterised in that the shutoff direction in front of the sealing body (21, 24) a further sealing body (22, 41) is arranged as standstill seal and foreign particle barrier.

13. Hydraulic turbine according to Claim 12, characterised in that in the intermediate space between the two sealing bodies (21, 22; 41, 42) the pressure is at least equal to the pressure of the water which is to be sealed off.

14. Hydraulic turbine according to Claim 13, characterised in that between the two sealing bodies (21, 22; 41, 42) or at the location of the rear sealing body (42) in the shutoff direction a supply arrangement (43) of a friction-reducing fluid under excess pressure opens out.

15. Hydraulic turbine according to Claim 14, characterised in that the supply arrangement (43) of the friction-reducing fluid opens out on the contact surface of the protective part (36).

16. Hydraulic turbine according to one of Claims 1 to 15, characterised in that in the shutoff direction behind a sealing body (46) the rotating part (18) has, to throw off leakage, an annular flange (33, 34) which engages in a collecting trough (48, 49), open to the axis, in the stationary part (7).

17. Hydraulic turbine according to Claim 16, characterised in that the collecting trough (48) is arranged in the shutoff direction between two sealing bodies (42, 46).

**Revendications**

1. Turbine hydraulique comportant un rotor (2, 8), qui tourne dans un corps de turbine fixe (7) et un joint annulaire (12) assurant l'étanchéité par rapport à l'eau traversant la turbine, entre des parties correspondantes du rotor (8) et du corps (7), une des parties servant de partie protectrice rigide, qui comporte une surface de déplacement (7', 8'), contre laquelle est appuyé au moins un corps de joint (16, 21, 27, 42, 46) inséré dans l'autre partie, ce corps de joint étant en matériau souple et compensant des tolérances d'espacement, cependant que la surface de déplacement peut recevoir un liquide diminuant le frottement, caractérisée en ce que la partie protectrice (7, 8) présente des dispositifs d'arrivée, par lesquels la surface de déplacement (7', 8') peut recevoir, principalement sur toute sa largeur et/ou sur celle du corps de joint, un liquide qui réduit le frottement et provient de la partie protectrice.

2. Joint suivant la revedication 1, caractérisé en ce que l'eau par rapport à laquelle l'étanchéité doit être réalisée sert de liquide diminuant le frottement.

3. Turbine hydraulique suivant la revendication 1 ou 2, caractérisée en ce que, comme dispositifs d'arrivée, on prévoit, dans la partie protectrice (7, 8), dans la zone de sa surface de déplacement (7', 8'), des rainures (18), dont le sens a une dominante dans le sens d'arrêt de l'eau par rapport à laquelle l'étanchéité doit être assurée.

4. Turbine hydraulique suivant la revendication 3, caractérisée en ce que la surface de déplacement (7', 8') est une surface annulaire (8') perpendiculaire à l'axe et que les rainures (18) ont une direction surtout radiale.

5. Turbine hydraulique suivant la revendication 3, caractérisée en ce que la surface de déplacement est sur une génératrice cylindrique et que les rainures sont surtout axiales.

6. Turbine hydraulique suivant la revendication 3, caractérisée en ce que la partie protectrice (7) présente des corps en céramique (19), dont les surfaces forment les surfaces de déplacement, cependant que les arêtes de corps en céramique (19) voisins forment les rainures (18).

7. Turbine hydraulique suivant la revendication 1, caractérisée en ce que, comme liquide diminuant le frottement, on utilise un fluide sans particules extérieures, en particulier de l'eau.

8. Turbine hydraulique suivant la revendication 7, caractérisée en ce que les dispositifs d'arrivée du liquid diminuant le frottement présentent, dans la partie protectrice (7), des alésages (20) débouchant sur la surface de déplacement (7').

9. Turbine hydraulique suivant la revendication 8, caractérisée en ce que les alésages (20) débouchent sur la surface de corps en céramique (19) insérés dans la partie protectrice (7) ou fixés sur elle.

10. Turbine hydraulique suivant une des revendications 1 à 9, caractérisée en ce que le corps de joint (16) est un joint à lèvre (16), dont la lèvre (17) s'appuie par son élasticité propre, par l'action d'un ressort inséré et/ou par l'action du fluide (7', 8'), par rapport auquel l'étanchéité doit être réalisée, contre la surface de déplacement, en compensant des tolérances d'espacement, l'extrémité libre de cette lèvre étant dirigée vers le fluide à arrêter.

11. Turbine hydraulique suivant une des revendications 1 à 9, caractérisée en ce que le corps de joint (27) est une bague d'étanchéité creuse souple, dont l'intérieur (28) est soumis à une surpression.

12. Turbine hydraulique suivant une des revendications 1 à 11, caractérisée en ce que, dans le sens d'arrêt, devant le corps de joint (21, 42), est disposé un autre corps de joint (22, 41), qui est utilisé à l'arrêt et pour bloquer les particules extérieures.

13. Turbine hydraulique suivant la revendication 12, caractérisée en ce que dans l'espace compris entre les deux corps de joint (21, 22; 41, 42), la pression est au moins égale à celle de l'eau par rapport à laquelle l'étanchéité doit être assurée.

14. Turbine hydraulique suivant la revendication 13, caractérisée en ce qu'entre les deux corps de joint (21, 22; 41, 42) ou à l'endroit du corps de joint (42), qui est à l'arrière dans le sens de l'arrêt, un dispositif d'arrivée (43) d'un liquide diminuant le frottement débouche avec une surpression.

15. Turbine hydraulique suivant la revendication 14, caractérisée en ce que le dispositif d'arrivée (43) du liquide diminuant le frottement débouche sur la surface de déplacement de la partie protectrice (36).

16. Turbine hydraulique suivant une des revendications 1 à 15, caractérisée en ce que, derrière un corps de joint (46) dans le sens d'arrêt, la pièce tournante (32) présente une patte annulaire (33, 34) pour le centrifugeage du liquide de fuite, cette patte pénétrant dans un compartiment récepteur (48, 49), qui se trouve dans la partie fixe (7) et est ouvert par rapport à l'axe.

17. Turbine hydraulique suivant la revendication 16, caractérisée en ce que le compartiment récepteur (48) est placé dans le sens d'arrêt entre deux corps de joint (42, 46).

0 062 098

**Fig.1**

**Fig.2a**

**Fig.2b**

**Fig.3a**

**Fig.3b**

9

Fig.4

Fig.5

Fig.6

Fig.7

Fig.8

Fig.9

Fig.10

Fig.11

Fig.12

Fig.13